# EUROPEAN PATENT APPLICATION

(11) **EP 4 776 700 A1**
(43) Date of publication of application: **15.07.2026**
(21) Application number: 24863256.4
(22) Date of filing: 06.09.2024
(51) Int. Cl.: H04W 52/02, H04W 76/28, H04W 72/232, H04W 76/27

(54) **METHOD AND APPARATUS FOR TRANSMITTING AND RECEIVING SIGNALS IN WIRELESS COMMUNICATION SYSTEM**

(30) Priority: 08.09.2023 KR 20230119956
(71) Applicant: LG Electronics Inc., Yeongdeungpo-gu Seoul 07336 (KR)
(72) Inventor: MYUNG, Sechang, Seoul 06772 (KR); KIM, Seonwook, Seoul 06772 (KR); LEE, Youngdae, Seoul 06772 (KR); YANG, Suckchel, Seoul 06772 (KR); HWANG, Seunggye, Seoul 06772 (KR)
(74) Representative: Frenkel, Matthias Alexander
(86) International application number: PCT/KR2024/013505
(87) International publication number: WO 2025/053677

(57) **Abstract**

A method and an apparatus for transmitting and receiving signals in a wireless communication system disclosed in the present specification comprise receiving DCI for a cell DTX/DRX configuration and activation/deactivation of the cell DTX/DRX configuration. Specifically, the DCI for activation/deactivation of the cell DTX/DRX configuration may be received via a paging occasion (PO).

## Description

### TECHNICAL FIELD

The present disclosure relates to a method and apparatus for use in a wireless communication system.

### BACKGROUND

Generally, a wireless communication system is developing to diversely cover a wide range to provide such a communication service as an audio communication service, a data communication service, and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

### DISCLOSURE

### TECHNICAL PROBLEM

The object of the present disclosure is to provide a signal transmission and reception method for efficiently transmitting and receiving signals in a wireless communication system and apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

### TECHNICAL SOLUTION

The present disclosure provides a method and apparatus for transmitting and receiving a signal in a wireless communication system.

In an aspect of the present disclosure, a method for transmitting and receiving a signal by a user equipment (UE) in a wireless communication system is provided, including receiving a configuration for a cell discontinuous transmission (DTX) operation and a cell discontinuous reception (DRX) operation, and receiving downlink control information (DCI) for activation and deactivation of the cell DTX operation and the cell DRX operation. Based on the UE not being in RRC_CONNECTED mode, the DCI is received in a paging occasion (PO) or a control resource set (CORESET) for a Type 0 common search space (CSS) set.

In another aspect of the present disclosure, a method for transmitting and receiving a signal by a base station (BS) in a wireless communication system is provided, including transmitting a configuration for a cell DTX operation and a cell DRX operation, and transmitting DCI for activation and deactivation of the cell DTX operation and the cell DRX operation. Based on a UE not being in RRC_CONNECTED mode, the DCI is transmitted in a PO or a CORESET for a Type 0 CSS set.

In another aspect of the present disclosure, there are provided an apparatus, a processor, and a storage medium for performing the signal transmission and reception method.

The apparatus may include an autonomous driving vehicle communicable with at least a UE, a network, and another autonomous driving vehicle other than the communication apparatus.

The above-described aspects of the present disclosure are only some of the preferred embodiments of the present disclosure, and various embodiments reflecting the technical features of the present disclosure may be derived and understood from the following detailed description of the present disclosure by those skilled in the art.

### ADVANTAGEOUS EFFECTS

According to one embodiment of the present disclosure, when signals are transmitted and received between communication devices, the signals may be transmitted and received more efficiently based on operations different from those in the prior art.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

### BRIEF DESCRIPTION OF THE DRAWINGS

FIG. 1 illustrates a radio frame structure.
FIG. 2 illustrates a resource grid during the duration of a slot.
FIG. 3 illustrates a self-contained slot structure.
FIGS. 4 to 5 are diagrams illustrating methods for transmitting and receiving a signal according to the embodiments of the present disclosure.
FIGS. 6 to 9 illustrate devices according to an embodiment of the present disclosure.

### DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

### 3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

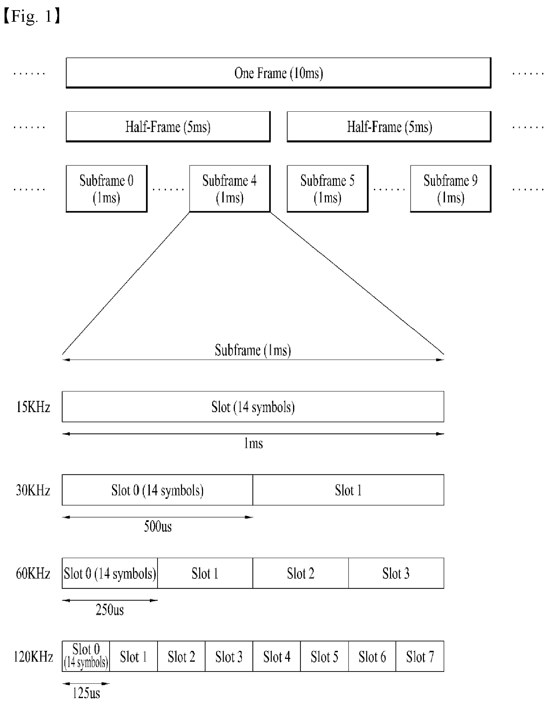

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

**[Table 1]**

| SCS (15*2^u) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * N^{slot}_{symb}: number of symbols in a slot * N^{frame,u}ₛₗₒₜ: number of slots in a frame * N^{subframe,u}ₛₗₒₜ: number of slots in a subframe | | | |

Table 2 illustrates that the number of symbols per slot, the number of slots per frame, and the number of slots per subframe vary according to SCSs in an extended CP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

**[Table 3]**

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

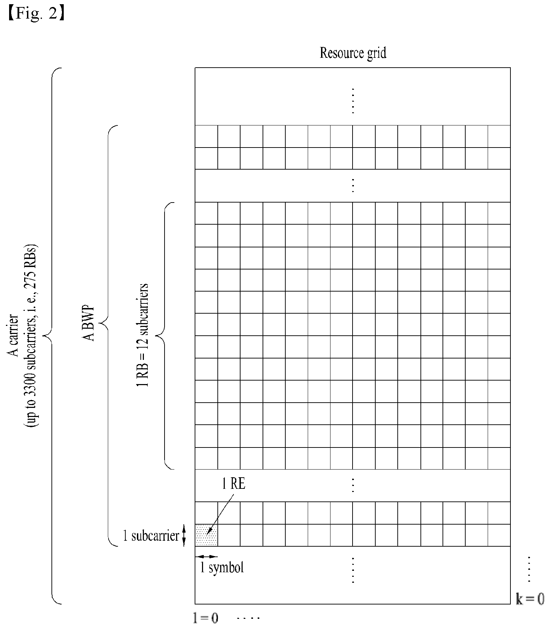

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace m∈{0, 1, ..., M-1} may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

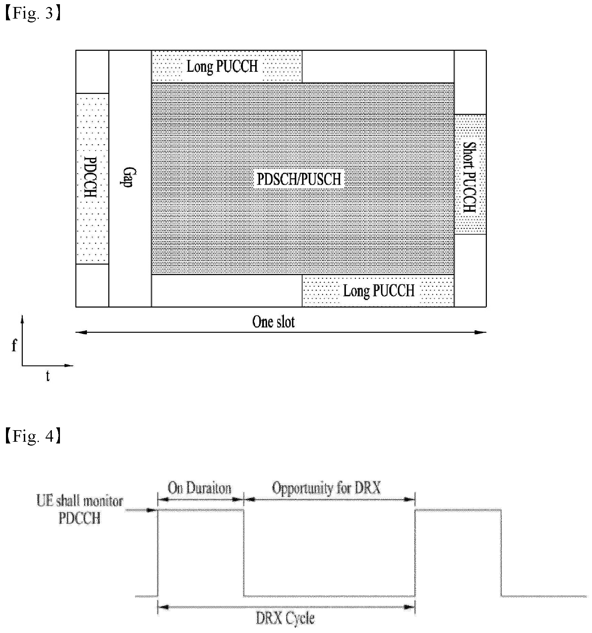

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

### UL Physical Channels/Signals

### (1) PUSCH

A PUSCH may carry UL data (e.g., uplink shared channel (UL-SCH) transport block (TB)) and/or uplink control information (UCI). The PUSCH may be transmitted based on a cyclic prefix orthogonal frequency division multiplexing (CP-OFDM) waveform or a discrete Fourier transform spread OFDM (DFT-s-OFDM) waveform. When the PUSCH is transmitted based on the DFT-s-OFDM waveform, the UE may transmit the PUSCH by applying transform precoding. For example, when the transform precoding is not allowed (e.g., when the transform precoding is disabled), the UE may transmit the PUSCH based on the CP-OFDM waveform. When the transform precoding is allowed (e.g., when the transform precoding is enabled), the UE may transmit the PUSCH based on the CP-OFDM waveform or DFT-s-OFDM waveform. PUSCH transmission may be dynamically scheduled by a PDCCH (dynamic scheduling) or semi-statically scheduled by higher layer signaling (e.g., RRC signaling) (and/or Layer 1 (L1) signaling (e.g., PDCCH)) (configured scheduling (CS)). Therefore, in the dynamic scheduling, the PUSCH transmission may be associated with the PDCCH, whereas in the CS, the PUSCH transmission may not be associated with the PDCCH. The CS may include PUSCH transmission based on a Type-1 configured grant (CG) and PUSCH transmission based on a Type-2 CG. For the Type-1 CG, all parameters for PUSCH transmission may be signaled by the higher layer. For the Type-2 CG, some parameters for PUSCH transmission may be signaled by higher layers, and the rest may be signaled by the PDCCH. Basically, in the CS, the PUSCH transmission may not be associated with the PDCCH.

### (2) PUCCH

A PUCCH may carry UCI. The UCI includes the following information.
- Scheduling request (SR): The SR is information used to request a UL-SCH resource.
- Hybrid automatic repeat and request acknowledgement) (HARQ-ACK): The HARQ-ACK is a signal in response to reception of a DL signal (e.g., PDSCH, SPS release PDCCH, etc.). The HARQ-ACK response may include positive ACK (ACK), negative ACK (NACK), DTX (Discontinuous Transmission), or NACK/DTX. The HARQ-ACK may be interchangeably used with A/N, ACK/NACK, HARQ-ACK/NACK, and the like. The HARQ-ACK may be generated on a TB/CBG basis.
- Channel Status Information (CSI): The CSI is feedback information on a DL channel. The CSI includes a channel quality indicator (CQI), a rank indicator (RI), a precoding matrix indicator (PMI), a precoding type indicator (PTI), and so on.

### DL Physical Channel/Signal

### (1) PDSCH

A PDSCH carries DL data (e.g., DL-shared channel transport block (DL-SCH TB)). The TB is coded into a codeword (CW) and then transmitted after scrambling and modulation processes. The CW includes one or more code blocks (CBs). One or more CBs may be grouped into one code block group (CBG). Depending on the configuration of a cell, the PDSCH may carry up to two CWs. Scrambling and modulation may be performed for each CW, and modulation symbols generated from each CW may be mapped to one or more layers. Each layer may be mapped to resources together with a DMRS after precoding and transmitted on a corresponding antenna port. The PDSCH may be dynamically scheduled by a PDCCH (dynamic scheduling). Alternatively, the PDSCH may be semi-statically scheduled based on higher layer (e.g., RRC) signaling (and/or Layer 1 (L1) signaling (e.g., PDCCH)) (configured scheduling (CS)). Therefore, in the dynamic scheduling, PDSCH transmission is accompanied by the PDCCH, whereas in the CS, PDSCH transmission may not be accompanied by the PDCCH. The CS may include semi-persistent scheduling (SPS).

### (2) PDCCH

A PDCCH carries Downlink Control Information (DCI). For example, the PDCCH (i.e., DCI) may carry: transmission formats and resource allocation of a DL-SCH; frequency/time resource allocation information on an uplink shared channel (UL-SCH); paging information on a paging channel (PCH); system information on a DL-SCH; time/frequency resource allocation information on a higher layer control message such as a random access response (RAR) transmitted over a PDSCH; transmit power control commands; and information on activation/deactivation of SPS/CS. Various DCI formats may be provided depending on information in DCI.

### Discontinuous Reception (DRX) Operation

The UE may perform a DRX operation, while performing the afore-described/proposed procedures and/or methods. A UE configured with DRX may reduce power consumption by discontinuously receiving a DL signal. DRX may be performed in an RRC_IDLE state, an RRC_INACTIVE state, and an RRC_CONNECTED stated. DRX is used for discontinuous reception of a paging signal in the RRC_IDLE state and the RRC_INACTIVE state. Now, DRX performed in the RRC_CONNECTED state (RRC_CONNECTED DRX) will be described below.

FIG. 4 is a diagram illustrating a DRX cycle (RRC_CONNECTED state).

Referring to FIG. 4, the DRX cycle includes On Duration and Opportunity for DRX. The DRX cycle defines a time interval in which On Duration is periodically repeated. On Duration is a time period during which the UE monitors to receive a PDCCH. When DRX is configured, the UE performs PDCCH monitoring during the On Duration. When there is any successfully detected PDCCH during the PDCCH monitoring, the UE operates an inactivity timer and is maintained in an awake state. On the other hand, when there is no successfully detected PDCCH during the PDCCH monitoring, the UE enters a sleep state, when the On Duration ends. Therefore, if DRX is configured, PDCCH monitoring/reception may be performed discontinuously in the time domain, when the afore-described/proposed procedures and/or methods are performed. For example, if DRX is configured, PDCCH reception occasions (e.g., slots having PDCCH search spaces) may be configured discontinuously according to a DRX configuration in the present disclosure. On the contrary, if DRX is not configured, PDCCH monitoring/reception may be performed continuously in the time domain, when the afore-described/proposed procedures and/or methods are performed. For example, if DRX is not configured, PDCCH reception occasions (e.g., slots having PDCCH search spaces) may be configured continuously in the present disclosure. PDCCH monitoring may be limited in a time period configured as a measurement gap, irrespective of whether DRX is configured.

Table 4 describes a UE operation related to DRX (in the RRC_CONNECTED state). Referring to Table 4, DRX configuration information is received by higher-layer (RRC) signaling, and DRX ON/OFF is controlled by a DRX command of the MAC layer. Once DRX is configured, the UE may perform PDCCH monitoring discontinuously in performing the described/proposed procedures and/or methods according to the present disclosure, as illustrated in FIG. 4.

**[Table 4]**

| | Type of signals | UE procedure |
|---|---|---|
| 1^{st} step | RRC signalling (MAC-CellGroupConfig) | - Receive DRX configuration information |
| 2^{nd} Step | MAC CE ((Long) DRX command MAC CE) | - Receive DRX command |
| 3^{rd} Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX.
- Value of drx-OnDurationTimer: defines the length of the starting duration of a DRX cycle.
- Value of drx-InactivityTimer: defines the length of a time duration in which the UE is in the awake state after a PDCCH occasion in which a PDCCH indicating initial UL or DL data has been detected.
- Value of drx-HARQ-RTT-TimerDL: defines the length of a maximum time duration from reception of a DL initial transmission to reception of a DL retransmission.
- Value of drx-HARQ-RTT-TimerDL: defines the length of a maximum time duration from reception of a grant for a DL initial transmission to reception of a grant for a UL retransmission.
- drx-LongCycleStartOffset: defines the time duration and starting time of a DRX cycle.
- drx-ShortCycle (optional): defines the time duration of a short DRX cycle.

When at least one of drx-OnDurationTimer, drac-InactivityTimer, drx-HARQ-RTT-TimerDL, or drx-HARQ-RTT-TimerDL is running, the UE performs PDCCH monitoring in each PDCCH occasion, while staying in the awake state.

### 1. Cell DTX-DRX operation for idle and inactive UEs

The above contents are applicable in combination with methods proposed in the present disclosure, which will be described later. Alternatively, the contents may clarify the technical features of the methods proposed in the present disclosure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system

Energy conservation of BSs may contribute to building eco-friendly networks by reducing carbon emissions and reducing the operational expenditure (OPEX) of communication service providers, and thus has been considered as an important issue in wireless communication systems, including 3GPP. In particular, as the introduction of 5G communications requires higher transmission rates, BSs need to include more antennas and provide services through wider bandwidths and frequency bands. This has resulted in energy costs of BSs reaching as high as 20 % of total OPEX, according to recent studies. Due to this increased interest in energy savings of BSs, a new study item called "study on network energy savings" is approved in 3GPP NR release 18.

In detail, in the corresponding item, to improve the energy saving capability of the BS in terms of transmission and reception, the following enhancement techniques have been considered.
- How to achieve more efficient operation dynamically and/or semi-statically and finer granularity adaptation of transmissions and/or receptions in one or more of network energy saving techniques in time, frequency, spatial, and power domains, with potential support/feedback from UE, and potential UE assistance information.

Particularly, the present disclosure proposes a method for saving BS energy by allowing a BS to preconfigure a specific ON/OFF pattern for a UE in idle and/or inactive mode, and perform a cell DTX/DRX operation in which a specific signal/channel is not transmitted/received in the OFF pattern.

When a UE enters a connected mode after initially connecting to the BS, the UE needs to continuously monitor PDCCH to check whether there is a transmission scheduled for the UE in each configured search space (SS). However, when this scheduling is not always present, a battery of the UE may quickly be drained due to unnecessary PDCCH monitoring operations being performed every time. Accordingly, the BS may configure connected mode discontinuous reception (C-DRX), which is an operation that achieves an effect of saving power for the UE by configuring a time period (ON duration) in which the UE needs to perform PDCCH monitoring and a time period (OFF duration) in which the UE does not need to perform PDCCH monitoring. In terms of the BS, a C-DRX of the UE may also be helpful for ES, the BS does not need to transmit PDCCH to a specific UE during the C-DRX OFF period of the corresponding UE, and thus the resource may be used for other purposes and ES gains may be obtained through DTX/DRX. However, the UE may transmit without restriction as needed in the OFF period by using pre-configured resources (e.g., SR, PUCCH, or CG-PUSCH), and thus the BS needs to wait for UL reception from the UE, which may or may not transmit at any time. C-DRX is configured to UE specific. DRX cycles or ON/OFF cycles are not aligned between UEs within a cell, and thus when the ON durations of the UEs are configured in a TDM format, the BS needs to perform PDCCH transmission for each ON duration, and thus may not sleep, making it difficult to expect ES gain.

Therefore, similar to UE C-DRX, the BS may save energy by turning off the transmission and reception of a specific signal/channel during an inactive period through a cell(-specific) DTX/DRX configuration that repeats active and inactive periods periodically. To transmit or receive data, the UE should establish a connection with the BS and enter RRC_CONNECTED mode. When there is no UE activity during a specific period, the BS transitions the UE to an RRC_IDLE state to reduce the power consumption of the UE. Since the UE should transition back to the connected mode whenever transmission/reception is required, latency may increase due to such RRC signaling. When the UE needs to transmit small data frequently, not only the latency but also the signaling overhead increases. To reduce BS signaling overhead and latency caused by such frequent RRC state changes, a new state called RRC_INACTIVE has been introduced. In the inactive mode, a transmission/reception operation may be performed fast with low signaling overhead by suspending an RRC connection. When a cell DTX/DRX operation is to be applied to idle and inactive-mode UEs as well as connected-mode UEs, the present disclosure proposes a method for configuring parameters in a cell DTX/DRX configuration and activating the cell DTX/DRX configuration, and a method for transmitting/receiving a signal and channel affected by the cell DTX/DRX operation.

In the present disclosure, when the BS operates in an NES mode for ES, this may mean, for example, that the BS preconfigures a plurality of OFF durations (DTX durations of the BS) to turn off transmission of a specific DL signal for a specific time period, and dynamically indicates one of the OFF durations to indicate that the corresponding DL signal will not be transmitted for a predefined time period, thereby operating to achieve power consumption reduction of the BS and the UE. When the BS operates in an NES mode for ES, this may mean an operating mode in which, in terms of BWP switching and dynamic RB adaptation in the frequency domain as well as the time domain, when a specific receiving antenna port of the BS is turned off semi-statically or dynamically, the BS does not perform transmission and/or reception through the corresponding antenna port, thereby reducing power consumption of the BS and the UE. When the BS operates in an NES mode for ES, this may mean an operating mode in which the BS does not transmit and/or receive through a specific receiving antenna port of the BS when the antenna port is turned off semi-statically or dynamically in the spatial domain, thereby reducing power consumption of the BS and the UE.

The Connected mod UE periodically performs PDCCH monitoring in the ON duration to check whether there is a DL/UL signal to transmit/receive. When a PDCCH is received in the ON duration, the UE performs DL reception or UL transmission according to the instructions. In the case of UL transmission of a UE, when there is data in the UL buffer regardless of C-DRX, a UE in a sleep mode may wake up and transmit SR. For a UE in an idle mode, the UE may operate in idle mode DRX (I-DRX), periodically monitoring paging and entering sleep mode again when the UE is not a target UE. Here, the meaning of the UE operating in a sleep mode may mean "regardless of the active time determined by C-DRX" or "even in a period other than the active time determined by C-DRX." 'In C-DRX operation, a time interval including ON and OFF durations is repeated' is defined as a DRX cycle. The length of a DRX cycle is defined as a time from the start of an ON interval to the start of a next ON interval. There are two types of DRX cycles: long DRX cycle and short DRX cycle. When the length of the DRX cycle increases, if a PDSCH is to be transmitted by the BS immediately after the end of a specific ON duration of the UE, the BS needs to wait until the next ON duration of the UE, which may increase latency. The UE does not transmit P-CSI or SRS during the OFF duration, and thus the BS may increase resource utilization by allocating the resources to other UEs. The BS may also operate in energy saving mode to save power during the OFF duration of the UE.

A long DRX cycle and a short DRX cycle may be configured simultaneously, in which case the long DRX cycle needs to be configured to an integer multiple of the short DRX cycle (the onDurationTimer values are the same). When there is no data activity during the ON duration of a long DRX cycle (e.g., no PDCCH reception), the UE operates with a long DRX cycle. When there is data activity during the ON duration of a long DRX cycle, the UE operates in a short DRX cycle for a time period corresponding to drx-ShortCycleTimer, and when there is no data activity during the ON period of the short DRX cycle, the UE switches back to the long DRX cycle and operates. In this case, the start of the ON duration in a short DRX cycle is determined by the drx-StartOffset and drx-SlotOffet values, as in a long DRX cycle.

The BS instruct the UE to enter a DRX sleep directly without operating in active mode until the end of the ON duration through the DRX command MAC control element (CE). That is, the current BS may terminate an active time of the UE and enter the DRX cycle immediately. When only a long DRX cycle is configured for the UE, the UE operates only in the long DRX cycle, and when a short DRX cycle is also configured, the UE enters the short DRX cycle mode immediately after receiving the DRX command MAC CE. When the BS instructs a long DRX command MAC CE, the UE operates in long DRX cycle mode even if a short DRX cycle is configured.

The BS may control a starting point of a long DRX cycle through an RRC parameter drx-LongCycleStartOffset, and the offset value is defined in ms units such that a long DRX cycle may start at a slot boundary. The starting point of the ON duration may be configured at slot level granularity through another RRC parameter drx-SlotOffset. The start of the ON duration is defined as a relative position of the ON duration by applying the slot offset indicated from the reference point indicated by LongCycleStartOffset. The BS may align the ON and OFF durations of multiple UEs within a cell and utilize the ON and OFF durations for an ES operation by adjusting the positions of the starting point of the DRX cycle and the starting point of the ON duration through the parameters. However, for ES through the dynamic transmit/receive OFF time pattern of the BS, a more dynamic offset value indication may be required.

The UE may perform ES by waking up only in the ON duration through the C-DRX configuration and monitoring the presence or absence of PDCCH transmitted to the UE, compared to continuously (e.g., every slot) monitoring the PDCCH. When the BS has no data to transmit in the upcoming ON interval of the UE, the BS may save some more battery of the UE by transmitting a WUS before the ON duration of the UE starts, indicating that there is no need to wake up from the ON duration (i.e., there is no need to start the onduration timer). When there is no data to be transmitted/received in the next ON duration for a UE with C-DRX configured, the BS may transmit a WUS through DCI format 2_6 in a WUS opportunity configured before the ON duration, thereby indicating to the UE that there is no need to wake up in this ON duration. The UE that receives the WUS instruction may remain in a sleep mode without switching to an active mode, allowing more ESs.

Similar to the C-DRX configuration of the UE, a cell DTX/DRX configuration may include parameters for a periodicity, a slot, an offset, an On-duration, and the like. A cell DTX configuration and a cell DRX configuration may be independently configured and activated/deactivated, respectively. That is, only cell DTX may be configured and activated without the cell DRX configuration, or conversely, only cell DRX may be configured and activated without the cell DTX configuration. Even if both cell DTX and cell DRX are configured, only one of the two configurations may be activated.

The cell DTX/DRX operation has a structure similar to that of C-DRX of the UE, and may include an active period in which all signals and channels may be transmitted/received without restriction, and a non-active period in which all signals and channels may be transmitted/received OFF or only specific signals and channels may be transmitted/received with restrictions. For example, in the non-active period, only PDCCH transmission or RACH/SR PUCCH reception of the BS may be permitted. Cell DTX/DRX configuration may only be configured and activated via RRC. Alternatively, some parameters may be configured by RRC and the remaining parameters may be configured/indicated and activated via L1/L2 signaling. L1/L2 signaling may be, for example, (group-common) DCI/MAC-CE. Information about the location and length of the active and inactive periods of the cell DTX/DRX may be pre-received and preconfigured through specific RRC parameters. For example, the start point of an active period may be configured by an offset relative to a specific subframe boundary or a specific SFN value. The duration of the active period may be configured through length-related parameters, timers, or the like. In this case, multiple candidates for parameters or timers may be preconfigured through RRC signaling, and then one of the configured candidates may be indicated upon activation through L1/L2 signaling. During the cell DTX/DRX active period, all signals and channels may be transmitted/received without any special transmission/reception restrictions, just like the normal operation of the BS. Time durations outside the active period are basically considered inactive periods, and transmission/reception may be restricted beyond pre-configured signals and channels. The BS may obtain energy saving (ES) gains through the operation of performing only the minimum transmission/reception, and thus the operation of the inactive period of the cell DTX/DRX operation may be regarded as the operation when the NES state/mode is ON.

Even for a UE in the RRC_IDLE or RRC_INACTIVE state, a semi-static ON/OFF period pattern may be configured through a cell DTX/DRX configuration, and signals/channels for which transmission/reception will not be performed during an OFF period may be preconfigured. For example, paging DCI may not be monitored in a paging occasion (PO) that is fully included within or partially overlaps with a cell DTX inactive period, and the reception of a common broadcast signal/channel such as SSB/SIB1 may also be turned off. Additionally, an RACH occasion (RO) fully included within or partially overlapping with a cell DRX inactive period may be regarded as a resource in which PRACH transmission may not be performed. Further, the UE may maintain a cell DTX/DRX configuration configured in the connected mode even after an RRC state transition (e.g., RRC release). Further, the UE may separately receive parameters to be applied on an RRC state basis or a configuration for a signal/channel to be turned off through the cell DTX/DRX configuration and apply it according to its current RRC state.

Since the UE in the RRC_IDLE state is not registered to a specific cell, it has no access stratum (AS) context or information received from the BS. The BS may initiate an RRC connection release procedure to transition the UE in the RRC_CONNECTED state to the RRC_IDLE state. The UE may also request the RRC connection release procedure from the BS. The UE is in a type of sleep mode and periodically wakes up according to an (I-)DRX cycle configured by an SIB or the BS to monitor a paging message transmitted by the BS. The BS may inform the UE in the RRC_IDLE state whether there is data to receive, through the paging message, and notify the UE of a system information change and an earthquake and tsunami warning system (ETWS)/commercial mobile alert system (CMAS) indication, through a short message.

A UE in the RRC_IDLE state monitors a paging channel for core network (CN)-initiated paging. A UE in the RRC_INACTIVE state monitors a paging channel for radio access network (RAN)-initiated paging. However, the UEs may reduce power consumption by monitoring paging channels in only one PO per DRX cycle according to a paging DRX cycle, without the need to monitor these paging channels continuously. When a UE wants to transition from the RRC_IDLE state to the RRC_CONNECTED state or request on-demand SI, it may transmit a PRACH to the BS, while not being allowed to transmit any other UL signal except for the PRACH.

As described above, the RRC_INACTIVE state is used not only to reduce the signaling overhead of the BS but also to reduce the latency involved in transitioning to the RRC_CONNECTED state. Additionally, the UE in the RRC_INACTIVE state may operate similarly to the RRC_IDLE state to save power. In the RRC_INACTIVE state, an AS context is stored in both the UE and the BS, allowing the state transition from RRC_INACTIVE to RRC_CONNECTED to be performed more quickly. In the RRC_INACTIVE state, the UE remains in a CN-CONNECTED state.

Similar to the RRC_IDLE state, the UE in the RRC_INACTIVE state is in a type of sleep mode and periodically wakes up according to a DRX cycle configured by an SIB or the BS to monitor whether there is a paging message. The BS may inform the UE in the RRC_INACTIVE state of data to receive through a paging message and provide an SI change notification or an ETWS/CMAS indication through a short message. As in the RRC_IDLE state, a PDCCH carrying a paging and a short message is scrambled with a P-RNTI, and an I-RNTI may be used to identify a suspended UE context. The BS may allocate the I-RNTI to the UE when it transitions from the RRC_CONNECTED state to the RRC_INACTIVE state through an RRCRelease message in SuspendConfig. In the RRC_INACTIVE state, the UE may transmit a PRACH to transition to the RRC_CONNECTED state or to request on-demand SI, while not being allowed to transmit any UL signal/channel other than the PRACH.

Hereinbelow, a UE in the RRC_IDLE state may be referred to as a "UE (operating) in the idle mode," and a UE in the RRC_INACTIVE state may be referred to as a "UE (operating) in the inactive mode," for convenience in the present disclosure.

### [Method #1] Method for instructing idle/inactive-mode UEs within a cell to (de)activate cell DTX/DRX through L1 signaling, such as a PDCCH (UE-specific DCI or group-common DCI)

### (1) Method for indicating (de)activation through DCI that schedules SIB1

UEs in a cell may receive a PBCH through an SSB and be configured with a time/frequency-domain resource allocation for CORESET 0 through MIB information. CORESET 0 is used for receiving an SIB1 PDCCH/DCI, and the UEs may receive SIB scheduling through the CORESET information in a Type 0 PDCCH common search space (CSS). While the UEs have already received a cell DTX/DRX configuration from the BS, they may receive an activation or deactivation indication for the cell DTX and/or cell DRX configuration through a specific field/bits within the PDCCH/DCI (that schedules the SIB) transmitted in the Type 0 PDCCH CSS. The specific field/bits in the DCI may be configured by reusing an existing field/bits or using a newly added field/bits. Since the DCI scheduling SIB1 is commonly received by all UEs in the cell, it may be used to indicate activation/deactivation of the cell DTX and/or cell DRX configuration without an additional PDCCH search space set configuration.

Additionally, the activation/deactivation of the cell DTX and/or cell DRX configuration may also be indicated to idle/inactive-mode UEs by DCI scheduling other system information (SI) in a Type 0A CSS and DCI scheduling multicast and broadcast services (MBS) in a Type 0B CSS, similar to the SIB1-scheduling DCI.

### (2) Method for indicating (de)activation through paging DCI

In LTE, since SI update information is included in a paging PDSCH message, a UE receiving a paging PDCCH in a PO should identify SI update information and receive SIB1 by decoding the PDSCH. In NR, for SI update, two types of SI update information may be indicated through a short message field masked with a P-RNTI within a PDCCH, without the need for decoding a PDSCH. A 1-bit field includes information indicating that there is a general SI update, and is used to indicate reception of SI update information in the next modification period. Another 1-bit field includes modification information such as ETWS or CMAS, which is not to be awaited until the next modification period, and this 1-bit field is used to indicate immediate SI update without waiting until the next modification period. However, since an SIB to be received is not indicated through a short message in both cases, the UE should receive SIB1 to identify an SIB for which information has been updated, and update other SI by identifying other SI scheduling information.

An idle/inactive-mode UE may receive an activation/deactivation indication for a cell DTX/DRX configuration received in the connected mode or through SIB1, through a specific field/bits in paging DCI. This indication may be configured by reusing an existing field in a paging message or a short message or using a newly added field/bits.

### (3) Method for indicating (de)activation through group-common DCI (GC-DCI)

Since a cell DTX/DRX configuration is commonly applied to all UEs in a cell, it may be more efficient in terms of signaling overhead and DCI size alignment to indicate activation/deactivation through GC-DCI than through UE-specific DCI. A method for extending an existing DCI format (e.g., formats 2_0 to 2_7) or DCI format 2_9 used to instruct connected-mode UEs to activate/deactivate a cell DTX/DRX configuration to idle/inactive-mode UEs may be considered.

DCI format 2_7 is used to provide a paging early indication and a tracking reference signal (TRS) availability indication to one or more idle/inactive-mode UEs. A PEI-RNTI is used for DCI format 2_7. A UE may read a bit of a corresponding subgroup in a paging indication field, and determine whether to skip the next PO. Since UEs configured with DCI format 2_7 among the idle/inactive-mode UEs monitor DCI format 2_7 before their POs, (de)activation of a cell DTX/DRX configuration may be indicated to the idle/inactive-mode UEs by an existing field/bits in DCI format 2_7 or a newly added field/bits.

For example, a method may be considered in which while a legacy UE reads only a bit at a location corresponding to its subgroup in the field/bits of DCI format 2_7, an NES-capable UE determines whether to active or deactivate a cell DTX/DRX configuration by reading the entire field bits (e.g., an entire paging indication field, an entire TRS availability indication field, or a combination of both) as well as some bits. Another method may also be considered in which a new group (e.g., Rel-19 NES-capable UEs) may be defined in addition to an existing subgroup for POs, and a paging indication bit for the group is interpreted as a cell DTX/DRX activation/deactivation indication.

GC-DCI (i.e., DCI format 2_9) used for indicating cell DTX/DRX (de)activation to connected-mode UEs may also be used for idle/inactive-mode UEs. For DCI format 2_9, for example, the monitoring configuration and the field configuration and/or sub-field configuration of the DCI format may differ between connected-mode UEs and idle/inactive-mode UEs. For instance, a parameter related to the starting position of a field/bits to be read by the idle/inactive-mode UEs may be configured through a higher-layer signal. Alternatively, when a specific offset is added to a parameter related to a starting position for each serving cell, at which legacy connected-mode UEs start to read a cell DTX/DRX configuration activation/deactivation indication, the added position may be interpreted as the position of a (de)activation indication for the idle/inactive-mode UEs.

### (4) Method for configuring an MO in consideration of a PO or a PEI occasion

In the above methods, when the existing SIB1 PDCCH, paging DCI, or GC-DCI is reused, an additional MO configuration may not be necessary. To indicate activation or deactivation of a cell DTX/DRX configuration to an idle/inactive-mode UE by separate L1 signaling (which may be additional SIB1 PDCCH/paging DCI/GC-DCI), an MO configuration (i.e., a PDCCH search space set) that the idle/inactive-mode UE may monitor may be additionally required. However, when an MO for the (de)activation indication of the cell DTX/DRX configuration is configured for idle/inactive-mode UEs in addition to an MO for monitoring paging DCI and DCI format 2_7 (i.e., PEI), the UE and the BS should wake up more frequently to perform monitoring, which may relatively decrease sleep time and energy saving gains. Therefore, when MOs are configured, the burden on the UE and the BS may be reduced by maximizing the utilization of POs or PEI occasions that the existing idle/inactive-mode UEs should monitor. For example, an MO of L1 signaling that indicates the activation/deactivation of the cell DTX/DRX configuration may be configured in FDM or TDM with a PO or a PEI occasion. In the case of TDM, the MO of the L1 signaling may be configured continuously immediately before or after the existing PO or PEI occasion. Alternatively, the MO may be configured after a specific offset (in slots/symbols) from the existing PO or PEI occasion.

### (5) UE operation when (de)activation DCI is not detected in MO

Idle/inactive-mode UEs configured with a cell DTX/DRX configuration may monitor an activation/deactivation indication in preset MOs, and upon receipt of DCI, operate according to the corresponding indication. However, from the perspective of the BS, when there is no need to change the activation/deactivation state, transmitting DCI in every MO may reduce signaling overhead and energy saving gains. From the perspective of the UE, there is a possibility of failing to detect DCI in an MO (including a case where the BS did not transmit it) or failing to decode the DCI, and thus it is necessary to define a UE operation for such a case. In the case of DCI format 2_7, when the UE fails to detect DCI in a PEI occasion, its default operation is to skip a PO. In the case of DCI format 2_6, the BS may preconfigure a default operation of the UE when the UE fails to detect DCI. For example, the UE may be configured to skip the On-durations of a corresponding DRX cycle.

In the case of an MO for activation/deactivation of a cell DTX/DRX configuration for an idle/inactive-mode UE, when the UE fails to detect DCI in the MO, maintaining an existing activation or deactivation state may be defined as the default operation or configured by the BS. This may mean that the BS transmits DCI only when changing the activation state to the deactivation state or changing the deactivation state to the activation state. Alternatively, transitioning to the deactivation state when the UE fails to detect DCI in the activation state, or to the activation state when the UE fails to detect DCI in the deactivation state may be defined as the default operation or configured by the BS. Characteristically, a method in which a UE skips the transmission/reception of a signal/channel included in a cell DTX/DRX configuration within a preset time period or a subsequent paging cycle as a default operation may also be considered.

### (6) Application timing when a cell DTX/DRX (de)activation indication/configuration is received

When a UE receives a (de)activation indication/configuration for a cell DTX/DRX configuration (including a case where the cell DTX/DRX configuration is activated or deactivated via the RRC only), a specific amount of time delay may be required from immediately after receiving the DCI until an actual corresponding cell DTX/DRX pattern is applied. Since the cell DTX/DRX configuration is common to all UEs within a cell, a specific time delay may be required even for alignment among the UEs within the cell. Further, unless the UE transmits an HARQ-ACK feedback, misalignment may occur in the understanding of the cell DTX/DRX operation between the BS and the UE due to the failure of the UE to receive the DCI transmitted by the BS. Considering this, the activation or deactivation indication may be transmitted in a plurality of MOs.

That is, in preparation for a case where the UE fails to receive a (GC-) DCI indication, the BS may transmit the (GC-) DCI indication multiple times over a plurality of MOs. In this case, a reference time, which is a time point at which the actual cell DTX/DRX configuration is applied, or an application delay may need to be determined. Even if the BS does not separately set a reference time or application delay, upon receipt of a (GC-) DCI indication in even one MO within a preconfigured MO group, the UE may activate/deactivate the cell DTX/DRX configuration after a preset time (e.g., 2 slots) from the last MO within the MO group. Through this method, the BS may align an activation/deactivation starting point of the cell DTX/DRX configuration among UEs, even if the UEs in the cell receive the (GC-) DCI at different timings. Characteristically, in the case of deactivation, the UE may apply the deactivation immediately upon receipt of the GC-DCI, regardless of the GC-DCI reception timing.

More generally, the UE may be preconfigured with a plurality of candidate (de)activation time points (which may be configured periodically). Upon receipt of an activation or deactivation GC-DCI indication in a specific MO, the UE may (de)activate cell DTX/DRX at the closest time point among the configured candidate (de)activation time points. In the case of deactivation, the UE may apply the deactivation immediately upon receipt of the GC-DCI indication.

Characteristically, when receiving DCI for activation/deactivation in a specific MO, the UE may apply the actual cell DTX/DRX configuration in the next modification period. The modification period may be set to a default DRX cycle included in an SIB, or (default DRX cycle)/N, or (modification period)/N.

### [Method #2] Method for cell DTX/DRX (de)activation linked to RRC state transition or RRC state of UE

Method #2 may include the following methods.
(1) A method in which a currently activated cell DTX/DRX configuration is (de)activated, when the RRC state of the UE is transitioned.
(2) A method in which a cell DTX/DRX configuration activated in a specific RRC state is maintained as is, regardless of the RRC state transition of the UE (a list of signals/channels to be turned on/off may be set differently for each RRC state within one cell DTX/DRX configuration).

The following is a detailed description of methods (1) and (2) of Method #2.

The BS may initiate an RRC connection release procedure to transition a UE in the RRC_CONNECTED state to the RRC_IDLE state, and the UE may also request the RRC connection release procedure from the BS. The UE may maintain a cell DTX/DRX configuration configured in the connected mode even if the RRC state changes (RRC release). Alternatively, when its RRC state changes, the UE may deactivate a cell DTX/DRX configuration that was in an activated state or activate a cell DTX/DRX configuration that was in a deactivated state.

In the case where there is a separate cell DTX/DRX configuration for each RRC state (which may be multiple cell DTX/DRX configurations), for example, in the case where a cell DTX/DRX configuration for the idle/inactive mode and a cell DTX/DRX configuration for the connected mode are respectively configured, when the RRC state transitions from the connected mode to the idle mode, the previously activated cell DTX/DRX configuration may be deactivated, and the cell DTX/DRX configuration for the idle/inactive mode may be activated. On the contrary, when an idle/inactive-mode UE transitions to the connected mode, the cell DTX/DRX configuration for the idle/inactive mode may be deactivated and the cell DTX/DRX configuration for the connected mode may be activated. That is, the cell DTX/DRX configuration may be automatically switched (according to a preconfiguration/agreement) according to the RRC state transition.

A UE may be configured with a plurality of cell DTX/DRX configurations, and an RRC state to be applied for each cell DTX/DRX configuration may also be configured. Alternatively, parameters to be applied in the connected mode and parameters to be applied in the idle/inactive mode may be included within a single cell DTX/DRX configuration. For example, cell DTX/DRX configuration #1 applicable only to the idle mode, cell DTX/DRX configuration #2 applicable to both the connected mode and the idle/inactive mode, and cell DTX/DRX configuration #3 applicable only to the connected mode may be configured. In this case, each cell DTX/DRX configuration may differ in the types and number of signals/channels for which transmission/reception is not performed during an off period. In addition, parameters such as the length and starting position (starting offset) of an on/off period may differ in each cell DTX/DRX configuration.

A cell DTX/DRX configuration configured for a UE may be applied identically (for example, the same ON/OFF pattern is applied) regardless of the RRC states. In this case, even if the RRC state of the UE is transitioned, a cell DTX/DRX configuration activated in a specific RRC state may be maintained as is. A list of signals/channels to be turned on/off may be set differently for each RRC state within one cell DTX/DRX configuration.

The contents of the present disclosure are not limited to transmission and reception of UL and/or DL signals. For example, the contents of the present disclosure may also be used in direct communication between UEs. A BS in the present disclosure may be a concept that includes not only a BS but also a relay node. For example, an operation of the BS in the present disclosure may be performed by the BS, but may also be performed by the relay node.

It is obvious that the examples of the proposed method described above may also be included as one of the implementation methods of the present disclosure, and thus may be considered as a kind of proposed method. The proposed methods described above may be implemented independently, but may also be implemented in the form of a combination (or merge) of some proposed methods. A rule may be defined such that information on whether the proposed methods are applicable (or information on the rules of the proposed methods) is reported by the BS to the UE or by a receiving UE to a receiving UE through a predefined signal (e.g., physical layer signal or higher layer signal).

### Implementation example

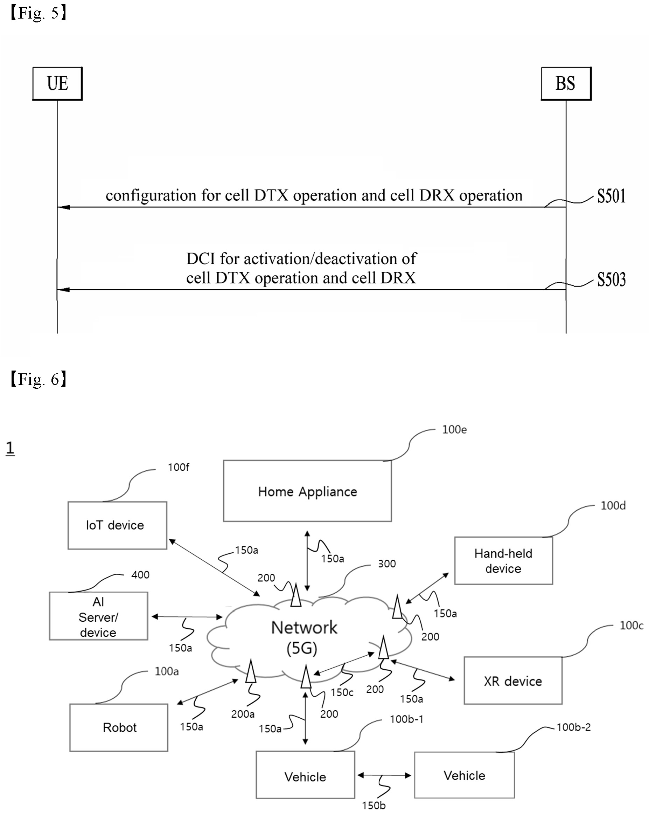

FIG. 5 is a flowchart of a signal transmission and reception method according to embodiments of the present disclosure.

Referring to FIG. 5, embodiments of the present disclosure may be performed by a UE and configured to include (i) receiving a configuration for a cell DTX operation and a cell DRX operation (S501), and receiving DCI for activation and deactivation of the cell DTX operation and the cell DRX operation (S503).

Other embodiments of the present disclosure may be performed by a BS and configured to include transmitting a configuration for a cell DTX operation and a cell DRX operation (S501), and transmitting DCI for activation and deactivation of the cell DTX operation and the cell DRX operation (S503).

In addition to the operations of FIG. 5, one or more of the operations described in section 1 may be additionally performed.

For example, referring to section (1) of Method #1, for a UE that is not in RRC_CONNECTED mode, the DCI for activation and deactivation of the cell DTX operation and the cell DRX operation may be transmitted and received in a CORESET (CORESET #0) for a Type 0 CSS set. Referring to section (2) of Method #1, for a UE that is not in RRC_CONNECTED mode, the DCI for activation and deactivation of the cell DTX operation and the cell DRX operation may be transmitted and received in a PO.

Referring to sections (1) to (3) of Method #1, the DCI may be DCI for scheduling a PDSCH including SIB1, paging DCI masked with a P-RNTI, or another GC-DCI. For example, the GC-DCI may be DCI format 2_7 masked with a PEI-RNTI. Alternatively, the DCI may be DCI format 2_9, which is DCI used for activation and deactivation of a cell DTX operation and a cell DRX operation for UEs in the RRC_CONNECTED mode.

However, the UE may read each DCI in a different manner from conventional DCI reading. For example, a specific bit group of bits in conventional GC-DCI may be for a first UE, and another bit group thereof may be for a second UE. Accordingly, the information bits of the GC-DCI may be divided into N subgroups for N UEs. In this situation, the UE that is not in the RRC_CONNECTED mode may check the entire bits as well as a subgroup corresponding to the UE and determine whether to activate or deactivate the cell DTX operation and the cell DRX operation.

Additionally, referring to section (5) of Method #1, when the UE fails to detect the DCI in an MO, the UE may maintain the existing activation or deactivation state of each of the cell DTX operation and the cell DRX operation, or transition to a state different from the current state. Combining this with section (2), since an MO for monitoring DCI is the same as a PO, when the UE fails to detect the DCI in the PO, the UE may maintain the existing activation or deactivation state of each of the cell DTX operation and the cell DRX operation, or transition to a state different from the current state.

Further, referring to section (6) of Method #1, the activation and deactivation of the cell DTX operation and the cell DRX operation may be applied from a specific time point after receiving the DCI. When the UE receives the DCI in one MO within a preconfigured MO group, the UE may activate/deactivate the cell DTX operation and the cell DRX operation after a preset time from the last MO within the MO group. Combining this with section (2), since an MO for monitoring DCI is the same as a PO, when the UE receives the DCI in one PO within a preconfigured PO group, the UE may activate/deactivate the cell DTX operation and the cell DRX operation after a preset time from the last PO within the PO group.

Alternatively, considering timing alignment between UEs, when the UE receives the DCI in one PO within the preconfigured PO group, the cell DTX operation and/or the cell DRX operation may be activated after a preset time from the last PO within the PO group. In the case of deactivation of the cell DTX operation and the cell DRX operation, the UE may deactivate the cell DTX operation and/or the cell DRX operation immediately after completely receiving the DCI, without consideration for timing alignment between UEs.

In addition to the operations described with respect to FIG. 5, one or more of the operations described with respect to FIGS. 1 to 4 and/or the operations described in section [1] may be additionally performed in combination.

### Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

FIG. 5 illustrates a communication system 1 applied to the present disclosure.

Referring to FIG. 5, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

### Example of wireless device to which the present disclosure is applied

FIG. 6 illustrates wireless devices applicable to the present disclosure.

Referring to FIG. 6, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 5.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

### Example of use of wireless device to which the present disclosure is applied

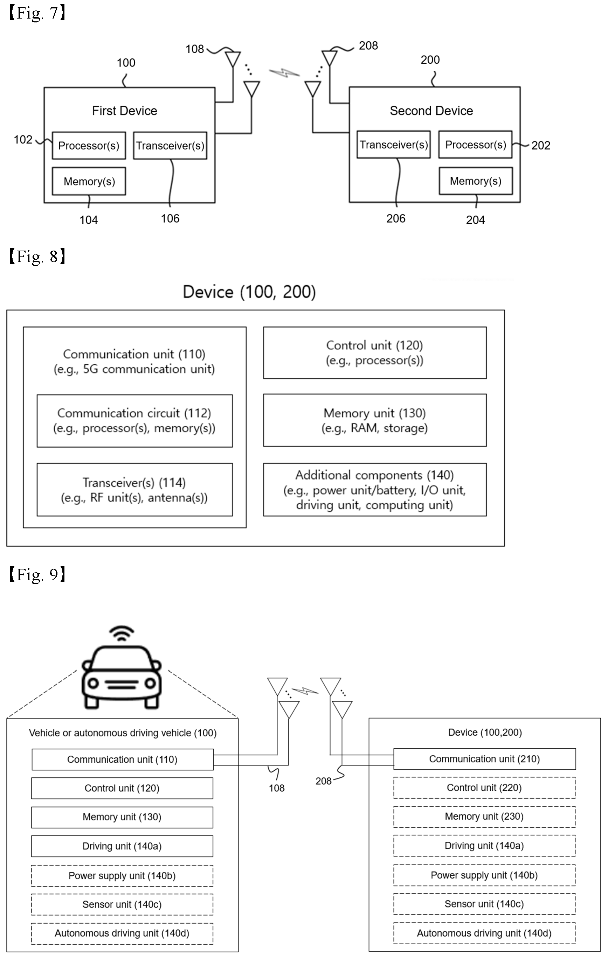

FIG. 7 illustrates another example of a wireless device applied to the present disclosure. The wireless device may be implemented in various forms according to a use case/service (refer to FIG. 5).

Referring to FIG. 7, wireless devices 100 and 200 may correspond to the wireless devices 100 and 200 of FIG. 6 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 6. For example, the transceiver(s) 114 may include the one or more transceivers 106 and 206 and/or the one or more antennas 108 and 208 of FIG. 6. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 5), the vehicles (100b-1 and 100b-2 of FIG. 5), the XR device (100c of FIG. 5), the hand-held device (100d of FIG. 5), the home appliance (100e of FIG. 5), the IoT device (100f of FIG. 5), a digital broadcasting terminal, a hologram device, a public safety device, an MTC device, a medical device, a FinTech device (or a finance device), a security device, a climate/environment device, the AI server/device (400 of FIG. 5), the BSs (200 of FIG. 5), a network node, or the like. The wireless device may be mobile or fixed according to a use case/service.

In FIG. 7, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

### Example of vehicle or autonomous driving vehicle to which the present disclosure is applied

FIG. 8 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 8, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 7, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

As described above, the present disclosure is applicable to various wireless communication systems.

## Claims

1. A method for transmitting and receiving a signal by a user equipment (UE) in a wireless communication system, the method comprising:
receiving a configuration for a cell discontinuous transmission (DTX) operation and a cell discontinuous reception (DRX) operation; and
receiving downlink control information (DCI) for activation and deactivation of the cell DTX operation and the cell DRX operation,
wherein based on the UE not being in RRC_CONNECTED mode, the DCI is received in a paging occasion (PO) or a control resource set (CORESET) for a Type 0 common search space (CSS) set.

2. The method of claim 1, wherein the DCI is DCI for scheduling a physical downlink shared channel (PDSCH) including system information block1 (SIB1).

3. The method of claim 1, wherein the DCI is masked with a paging-radio network temporary identifier (P-RNTI).

4. The method of claim 1, wherein the DCI is group-common DCI.

5. The method of claim 4, wherein the DCI is masked with a paging early indication-radio network temporary identifier (PEI-RNTI).

6. The method of claim 4, wherein it is determined whether to activate or deactivate the cell DTX operation and the cell DRX operation, based on bits of a subgroup for the UE and a subgroup for another UE within the DCI.

7. The method of claim 4, wherein the DCI has the same format as DCI for activation and deactivation of a cell DTX operation and a cell DRX operation for a UE in the RRC_CONNECTED mode.

8. The method of claim 1, wherein when the DCI is not received in the PO or the CORESET, an existing activation or deactivation state of the cell DTX operation and the cell DRX operation is maintained.

9. The method of claim 1, wherein the cell DTX operation or the cell DRX operation is activated after a preset time from a last PO within a PO group including the PO.

10. The method of claim 9, wherein the cell DTX operation and the cell DRX operation are deactivated immediately after the reception of the DCI in the PO is completed.

11. A user equipment (UE) for transmitting and receiving a signal in a wireless communication system, the UE comprising:
at least one transceiver;
at least one processor; and
at least one memory operably connected to the at least one processor and storing instructions that, when executed, cause the at least one processor to perform specific operations,
wherein the specific operations include:
receiving a configuration for a cell discontinuous transmission (DTX) operation and a cell discontinuous reception (DRX) operation; and
receiving downlink control information (DCI) for activation and deactivation of the cell DTX operation and the cell DRX operation, and
wherein based on the UE not being in RRC_CONNECTED mode, the DCI is received in a paging occasion (PO) or a control resource set (CORESET) for a Type 0 common search space (CSS) set.

12. An apparatus for a user equipment (UE), comprising:
at least one processor; and
at least one computer memory operably connected to the at least one processor and, when executed, causing the at least one processor to perform operations,
wherein the operations include:
receiving a configuration for a cell discontinuous transmission (DTX) operation and a cell discontinuous reception (DRX) operation; and
receiving downlink control information (DCI) for activation and deactivation of the cell DTX operation and the cell DRX operation, and
wherein based on the UE not being in RRC_CONNECTED mode, the DCI is received in a paging occasion (PO) or a control resource set (CORESET) for a Type 0 common search space (CSS) set.

13. A non-transitory computer-readable storage medium including at least one computer program that causes at least one processor to perform operations,
wherein the operations include:
receiving a configuration for a cell discontinuous transmission (DTX) operation and a cell discontinuous reception (DRX) operation; and
receiving downlink control information (DCI) for activation and deactivation of the cell DTX operation and the cell DRX operation, and
wherein based on the UE not being in RRC_CONNECTED mode, the DCI is received in a paging occasion (PO) or a control resource set (CORESET) for a Type 0 common search space (CSS) set.

14. A method for transmitting and receiving a signal by a base station (BS) in a wireless communication system, the method comprising:
transmitting a configuration for a cell discontinuous transmission (DTX) operation and a cell discontinuous reception (DRX) operation; and
transmitting downlink control information (DCI) for activation and deactivation of the cell DTX operation and the cell DRX operation,
wherein based on a user equipment (UE) not being in RRC_CONNECTED mode, the DCI is transmitted in a paging occasion (PO) or a control resource set (CORESET) for a Type 0 common search space (CSS) set.

15. A base station (BS) for transmitting and receiving a signal in a wireless communication system, the BS comprising:
at least one transceiver;
at least one processor; and
at least one memory operably connected to the at least one processor and storing instructions that, when executed, cause the at least one processor to perform specific operations,
wherein the specific operations include:
transmitting a configuration for a cell discontinuous transmission (DTX) operation and a cell discontinuous reception (DRX) operation; and
transmitting downlink control information (DCI) for activation and deactivation of the cell DTX operation and the cell DRX operation, and
wherein based on a user equipment (UE) not being in an RRC_CONNECTED mode, the DCI is transmitted in a paging occasion (PO) or a control resource set (CORESET) for a Type 0 common search space (CSS) set.
